Europäisches Patentamt

European Patent Office

Office européen des brevets

(11) Publication number: **0 504 515 A2**

# EUROPEAN PATENT APPLICATION

(21) Application number: **91306398.8**

(22) Date of filing: **15.07.91**

(51) Int. Cl.5: **G06F 11/26**

(30) Priority: **22.03.91 US 673688**

(43) Date of publication of application:
**23.09.92 Bulletin 92/39**

(84) Designated Contracting States:
**DE FR GB IT NL**

(71) Applicant: **JOHN FLUKE MFG. CO., INC.**
**P.O. Box 9090**
**Everett Washington 98206-9090(US)**

(72) Inventor: **Moore, Matthew P.**
**1619 167th Avenue N.E.**
**Bellevue, WA 98008(US)**

(74) Representative: **Burke, Steven David et al**
**R.G.C. Jenkins & Co. 26 Caxton Street**
**London SW1H 0RJ(GB)**

(54) Memory emulation test system in which undesirable microprocessor reset is precluded.

(57) An emulative test system is provided in which a UUT microprocessor may execute user-written code in an emulation memory, or pre-existing code in a UUT boot ROM, at its own clock rate, and then switch to execution of tester-supplied code from the test system's emulation memory without resetting the UUT microprocessor or disturbing UUT devices that have been initialized.

FIG.1

## Background of the Invention

This invention relates generally to emulative testing of microprocessor-based electronic systems, and in particular to a memory emulation test system in which undesirable microprocessor reset is precluded.

Emulative testers, so called because they emulate the behavior of microprocessor-kernel-related devices, are popular for functional testing and fault isolation in microprocessor-based boards or systems. Typically, the emulative tester is connected to a unit under test (UUT) at convenient locations, such as the microprocessor and memory sockets, and effectively takes control of the UUT as though it were part of the UUT's microprocessor kernel. An example of such an emulative tester is described in U.S. Patent No. 4,868,822 issued to Marshall H. Scott et al., and assigned to John Fluke Mfg. Co., Inc.

U. S. Patent No. 4,868,822 discloses an emulative tester that is plugged into vacated read-only memory (ROM) sockets on the UUT to allow the UUT's microprocessor to execute instructions contained in emulation memory within the tester. The removed ROMs, which contain the boot-up instructions for the UUT microprocessor, may be plugged into a ROM module associated with the tester so that a user may select alternatively between emulation memory and the UUT's own boot ROMs. The emulative tester also includes a number of leads that connect to the UUT microprocessor for developing sync pulses and providing reset signals from the tester to the processor.

One principle advantage of such an emulative tester is that user-written test routines may be executed by the UUT microprocessor from the tester's emulation memory in a so-called "run UUT" mode of operation; that is, the tester remains electrically connected to the UUT while the UUT microprocessor operates at its own clock rate, executing instructions it thinks it is fetching from its own memory, including its boot ROM. This mode of operation allows faster execution of functional tests, wider test coverage, and allows the same emulative test system to interface to different UUTs.

One major problem associated with the prior art system described above is once the user's code residing in the tester's emulation memory is executed, there is no way to begin executing tester-generated code without resetting the UUT microprocessor. That is, the UUT microprocessor must be reset before the user code can be executed (so that it begins at the appropriate memory address), and then reset again when the emulative test system regains control of the UUT microprocessor (again establishing the correct memory address). Resetting the UUT microprocessor complicates the testing process in several ways. Information cannot be passed to and from the user-written test routines in UUT microprocessor registers because the contents of such registers generally do not survive the reset process. This means that information must be passed using memory resources on the UUT; however, these resources may not be functional, or may not be designed to retain data through the reset process. Resetting the UUT microprocessor often results in the loss of initialization of other devices on the UUT, such as programmable interface chips, registers, and input/output (I/O) devices. Duplicating UUT initialization code in each and every user-written test routine would be tedious, error prone, and expensive, and thus is impractical. Moreover, users of emulative test equipment often lack the necessary design information and skills to write such initialization code effectively.

Another problem associated with prior art systems is that often it is desirable to execute pre-existing initialization code existing in the UUT's boot ROM, and then at some point switch over to the test programs furnished by the tester's emulation memory without resetting the UUT microprocessor. In the prior art system described above, it is possible to switch from a boot ROM plugged into a ROM module to the emulation memory in the tester; however, such switching is not done while a test routine is in progress, and the microprocessor is reset in the process. This causes loss of some or all of the OUT device status just set up by the pre-existing initialization code.

## Summary of the Invention

In accordance with the present invention, a memory emulation test system is provided in which a UUT microprocessor may execute user-written code or pre-existing initialisation code at its own clock rate and then switch to execution of tester-supplied code from the tester's emulation memory without resetting the microprocessor.

In the case of switching from user-written code to tester-supplied code, the user may add assembly language instructions to the tester-supplied test system programs that run in the UUT microprocessor. The user follows a set of relatively simple rules while writing test routines. These routines are then incorporated into the tester-supplied test programs in a controlled way. The rules include ways to pass information in the UUT microprocessor registers, and ways to pass control to the user-written routines, and then back to the tester-supplied programs, without resetting the UUT microprocessor. Because the UUT microprocessor is not reset, UUT device initialization is not lost, and the UUT microprocessor register contents are preserved. This solves the problem of loss of initialization during reset, and of passing information in UUT resources other than processor registers.

In the case of switching from pre-existing initialization code residing in the UUT's boot ROM to tester-supplied code, an emulation RAM in the tester is set up with a loop of no-operation (NOP) instructions. While the UUT microprocessor is executing instructions out of its boot ROM, the emulation RAM's data bus to the UUT is inhibited to prevent bus conflict. At a user-supplied "break address," a user-supplied "break sync count" is begun in the tester to ensure that the switch from boot ROM to emulation RAM occurs between machine instruction cycles. At the end of the "break sync count" the emulation RAM is enabled and the boot ROM is disabled, allowing the UUT microprocessor to execute the loop of NOP instructions. The process of the tester gaining control of the UUT microprocessor is complete when emulation RAM banks are switched at a predetermined address, allowing the UUT microprocessor to begin executing tester-supplied programs. This two-step process ensures that control of the UUT microprocessor is handed off to the tester without resetting the UUT microprocessor or disturbing any of the UUT devices initialized earlier when the UUT was reset.

It is therefore one object of the present invention to provide a memory emulation test system in which undesirable microprocessor reset is precluded.

It is another object of the present invention to provide an emulative test system in which a UUT microprocessor can execute user-written code or pre-existing code, and then switch to executing tester-supplied code without being reset.

Other objects, features, and advantages of the present invention will become obvious to those having ordinary skill in the art upon a reading of the following description when taken in conjunction with the accompanying drawings.

## Brief Description of the Drawings

Fig. 1 is a generalized block diagram of an emulative tester of the invention connected to a unit under test;

Fig. 2 is a diagram of memory maps to explain the UUT-memory-to-tester-memory switching process of the present invention.

## Detailed Description of the Invention

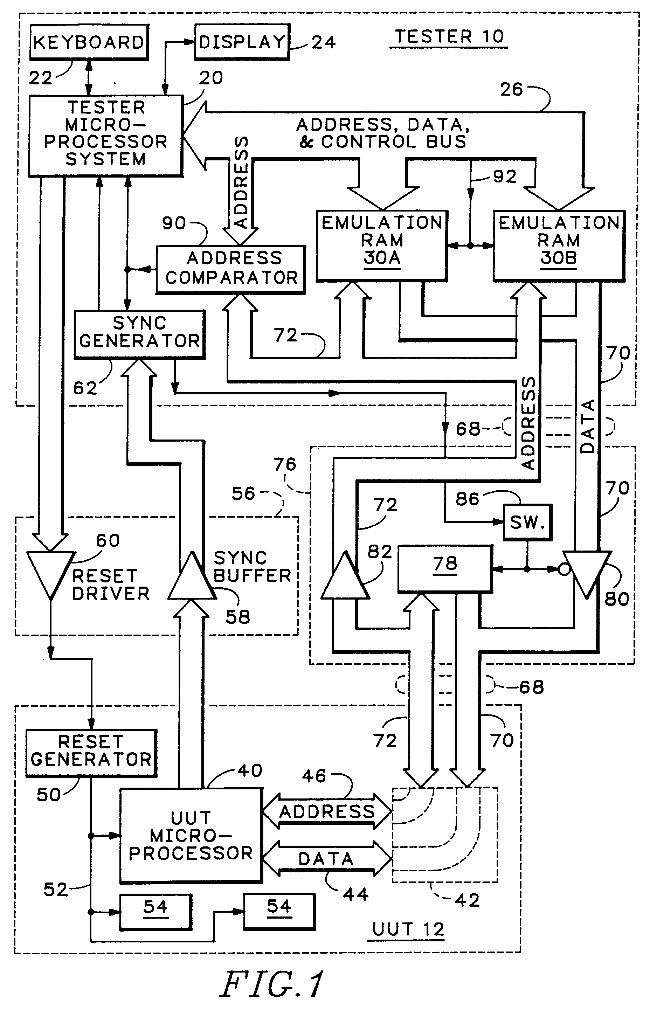

Referring to Fig. 1 of the drawings, there is shown a generalized block diagram of an emulative tester 10 connected to a unit under test (UUT) 12.

The tester is a modified version of a tester in accordance with U.S. Patent No. 4,868,822. The emulative tester 10, which physically may comprise a mainframe unit and an interface pod, includes a microprocessor system 20 having its own kernel-related devices, such as a clock, a bus architecture, registers, and memories, which interacts with a keyboard 22 and a display 24 to provide a user-interactive test system. The tester microprocessor system is connected via a bus 26 comprising data, address, and control lines to a pair of emulation random-access memories (RAMs) 30A and 30B. Emulation RAMs 30A and 30B are operated in such a manner that while one of the RAMs is being accessed by the UUT, the other is being loaded by the microprocessor system 20. At the appropriate time, the RAMs are switched, permitting uninterrupted operation.

UUT 12 is exemplary of any of a wide variety of microprocessor based systems whose operation is to be tested, and includes as the portion of interest a UUT microprocessor 40 connected to its memory 42, which includes a boot read-only memory (ROM) section, via a data bus 44 and an address bus 46. A reset generator 50 provides an output signal via lines 52 to initialize the UUT microprocessor 40 and other UUT devices 54 following application of power or performance of a "soft boot" (re-booting the system without turning the power off).

Interconnection of the tester 10 with the UUT 12 includes a sync module 56 containing a sync buffer 58 an reset driver 60 to interconnect control systems of the two microprocessors 20 and 40, and a memory connection from emulation RAMs 30A and 30b to memory 42. Synchronizing signals of UUT microprocessor 40, including UUT clock signals, are applied via sync buffer 58 a sync generator 62 to synchronize certain activities in the tester with the UUT, as will be explained in detail below. Tester microprocessor system 20, when instructed to do so, sends reset control signals to a reset driver 60, which in turn generates a reset pulse which is applied reset generator 50, overriding UUT microprocessor 40's reset system and allowing the tester 10 to gain control of the UUT. Emulation RAMs 30A and 30B are connected to memory 42 through a cable structure 68 including a data bus 70 and an address bus 72. The UUT memory 42 is shown as a dashed line to represent that the UUT memory may either be disabled or removed from its socket. The cable structure 68, therefore, may either plug directly into the UUT memory socket or may be clipped over the pins of a disabled UUT memory such that data bus 70 is electrically connected to UUT data bus 44 and address bus 72 is electrically connected to UUT address bus 46. Cable structure 68 also includes a memory module 76 having a memory socket 78 electrically connected to buses 70 and 72, and bidirectional buffers 80 and 82 interposed in the signal paths of buses 70 and 72, respectively. The UUT memory 42, which may be RAM or ROM or a combination of both, may be plugged directly into socket 78. In this configuration, an operator can select between instructions contained in emulation RAMs 30A and 30B or UUT memory 42 residing in socket 78 by means of a switch 86, which enables either the data buffer 80 or the memory socket 78 while disabling the other.

Tester 10 also includes an address comparator 90 which receives predetermined addresses from tester microprocessor system 20 and compares them with addresses on address bus 72. Upon a matching of addresses, a signal is issued to logic circuitry within the sync generator 62, which has been previously armed by the microprocessor system 20, to switch emulation RAMs 30A and 30B at the appropriate time, and to operate switch 86 at the appropriate time.

In accordance with one aspect of the present invention, a method is provided whereby the UUT microprocessor 40 may be reset, initializing all of the UUT devices, allowing the UUT microprocessor to execute at its own clock rate either user-written code provided to emulation RAMs 30A and 30B, or pre-existing instructions from its boot ROM 42, and then at a predetermined point, switch over and begin executing tester-supplied instructions provided by emulation RAMs 30A and 30B, without resetting UUT microprocessor 40 or disturbing the contents of other UUT devices 54.

In the case of switching from user-written code to tester-supplied code stored in emulation RAMs 30A and 30B, the user may add assembly language instructions to the tester-supplied routines that are executed by the UUT microprocessor in such a way that the UUT microprocessor, executing at its own clock rate, does not realize a switch from the user-written code to tester-supplied code has occurred and therefore does not reset. The user-written code may be entered into the tester via the keyboard 22, or may be down-loaded from some form of magnetic storage media such as a diskette or tape. The rules for writing test routines to be added to the tester-supplied code depends upon the type of microprocessor whose memory is to be emulated. The example given here is for the 68030; however, one having ordinary skill in the art can easily adapt this description to other types of microprocessors.

The address range for the user-written code must be continuous from some selected starting address up to the end of the boot ROM space. In other words, the user selects the starting address depending upon the amount of code to be added.

The selected starting address (or one within the range) may be specified to the test system to cause a jump to that address to begin executing the user code. UUT registers are utilized for passing data to and from user-written code as it is executed, just as would occur if boot-up instructions were being executed. User-written code returns control to the tester by executing a jump to an address (outside the user's address range) fetched as an instruction from a predetermined UUT register that was initialized to contain that instruction. Other rules include certain housekeeping to make sure the switch-over to the tester takes place without killing the program, since it is desired that the UUT continues to execute at its own clock rate. For example, anything enabled, such as interrupts, must be disabled before control is passed. Also, the user-written code should not contain any instructions that would cause the UUT microprocessor to exit from its operating mode. Because the UUT microprocessor is not reset, UUT device initialization is not lost, and the UUT microprocessor register contents are preserved.

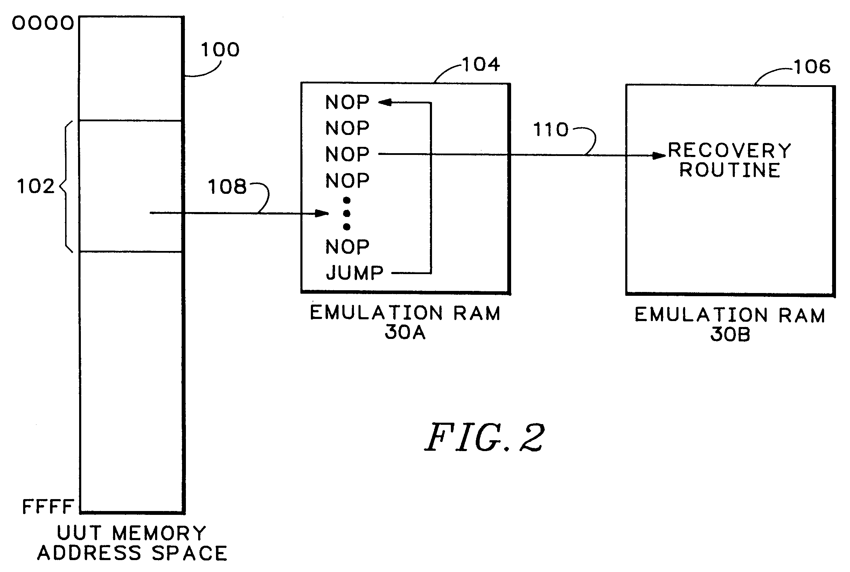

To gain an understanding of how the UUT microprocessor is capable of executing pre-existing instructions from its boot ROM 42, and then at a predetermined point switch over and continue executing at its own clock rate and without being reset tester-supplied instructions provided by the emulation RAMs, refer to Fig. 2. Block 100 represents a memory map of UUT memory 42, including a boot ROM space 102 having a predetermined address range. Block 104 represents an address range associated with one of the emulation RAMs 30A and 30B (30A in Fig. 2), and block 106 represents an address range associated with the other of the emulation RAMs (30B in Fig. 2). The user, who knows the starting and ending addresses of the boot ROM, as well as the type of microprocessor employed by the UUT, supplies a "break address" and a "break sync count" to the tester 10 by entering them into keyboard 22 when setting up the test program.

Consider the following operating sequence. Initially, buffer 80 is inhibited and the memory 42 in socket 78 on memory module 76 is enabled. UUT microprocessor 40, as well as devices 54, is reset by a reset signal issued from reset driver 60, overriding reset generator 50 in the UUT 12. Upon reset, UUT microprocessor 40 is vectored to its boot ROM, where it begins to execute at its own clock rate boot-up instructions contained therein. Since the UUT may be a newly-manufactured board and this is the first time it is operated, part of the test may be to determine whether various UUT devices can be initialized by the boot-up instructions. If these devices pass the test and are properly initialized, the test procedure continues.

The "break address", which may suitably be the last address of the boot ROM 102 instructions, is furnished to one input of comparator 90 by tester microprocessor system 20. When the pre-existing code in the boot ROM space 102 causes UUT microprocessor 40 fetch an instruction from the "break address", the "break address" appears on bus 72, causing address comparator 90 to issue a signal to logic circuitry within sync generator 62, which in turn begins the "break sync count" provided by the user. This sequence is represented by line 108 in Fig. 2.

The purpose of the "break sync count" is to ensure that switching to the emulation RAM occurs between machine instructions. For example, if the switch were made in the middle of a multi-fetch or pipelined instruction, the resulting "Illegal Instruction Error" could put the UUT microprocessor 40 into such a state that resetting it would be the only way to regain control. The "break sync count" is performed in synchronism with the UUT clock and bus cycle signals applied via sync buffer 58 to the sync generator 62. Upon completion of the "break sync count", a signal is issued to switch 86 to enable buffer 80 while disabling memory 42 in socket 78. This switching is accomplished between instruction cycles so that on the next address following the "break address", UUT microprocessor 40 accesses the instructions contained in emulation RAM 30A.

Emulation RAM 30A, which may suitably have the same address range as the boot ROM space 102, is filled with NOP codes (instructions to the UUT microprocessor 40 to skip forward to the next instruction). Thus, it can be discerned that when the boot ROM is replaced by the emulation RAM, the microprocessor 40 continues to execute instructions without interruption and without being reset. At the last address in the emulation RAM range, a jump instruction causes microprocessor 40 to jump back to the lowest address in the range, so that microprocessor continues to execute a long loop of NOP codes.

While the UUT microprocessor is executing the loop of NOP codes in emulation RAM 30A, emulation RAM 30B is prepared by loading tester-supplied test routines into it. These test routines include a "recovery routine" beginning at a predetermined start address that is also within the range of addresses being executed in emulation RAM 30A. When this start address is reached, it appears on address bus 72, and address comparator 90 issues a signal to its associated logic circuitry, which in turn issues a "RAM select" signal on line 92 to enable RAM 30B while disabling RAM 30A. This sequence of events is represented by line 110 in Fig. 2.

UUT microprocessor 40 begins executing instructions in the "recovery routine" stored in emulation RAM 30B, completing the process of allowing the tester 10 to gain control of the UUT microprocessor. Thereafter, tester-supplied test routines may be executed in the conventional manner.

While I have shown and described the preferred embodiments of my invention, it will be apparent to those skilled in the art that many changes and modifications may be made without departing from my invention in its broader aspects. For example, the emulator may include both a microprocessor and a memory for substitution in place of those of the UUT. It is therefore contemplated that the appended claims will cover all such changes and modifications as fall within the true scope of the invention.

**Claims**

1. In an emulative test system connectable to a unit under test (UUT) having a UUT microprocessor and a UUT memory associated therewith, said emulative test system having an emulation memory capable of being substituted in place of said UUT memory, a method of providing continuous operation of said UUT microprocessor and precluding reset thereof while switching from a first set of instructions to a second set of instructions, comprising the steps of:

(a) resetting said UUT microprocessor and causing it start executing said predetermined first set of instructions at a preselected start address;

(b) causing said UUT microprocessor to respond, without being reset, to a predetermined event associated with said first set of instructions to access a predetermined address associated with said second set of instructions; and

(c) causing said UUT microprocessor to execute said second set of instructions.

2. A method in accordance with claim 1 wherein said first and second sets of instructions are contained within said emulation memory, and when said predetermined event occurs, said predetermined address is obtained from a UUT register.

3. A method in accordance with claim 2 wherein said predetermined event is the fetching of a jump instruction.

4. A method in accordance with claim 1 wherein said first set of instructions is contained in said UUT memory and said second set of instructions is contained in said emulation memory, and when said predetermined event occurs, said emulation memory is substituted for said UUT memory.

5. A method in accordance with claim 4 wherein said predetermined event is the occurrence of a break address.

6. A method in accordance with claim 5 wherein an intermediate set of instructions are executed for a predetermined number of UUT machine cycles in response to said break address to ensure that said second set of instructions are synchronously provided to said UUT microprocessor between machine cycles.

7. An emulative test system connectable to a unit under test (UUT) which has a microprocessor circuit section including a UUT microprocessor and a UUT memory associated therewith, the emulative test system comprising an emulation section which includes at least a memory part comprising one or more memories and which is capable of being substituted in place of at least the UUT memory of the microprocessor circuit section, wherein the emulative test system has means for recognising a predetermined event associated with a first set of microprocessor instructions stored in one of said memories and means responsive thereto for switching to a second set of instructions stored in another of said memories without issuing a microprocessor reset instruction.

8. A system as claimed in claim 7, including means for connecting the system to the UUT microprocessor so that said first and second sets of instructions are executed by said UUT microprocessor.

*FIG.1*

FIG.2

EMULATION RAM
30B

RECOVERY
ROUTINE

106

110

104

EMULATION RAM
30A

NOP
NOP
NOP
NOP
• • •
NOP
JUMP

108

100

0000

102

FFFF

UUT MEMORY
ADDRESS SPACE

8